# EUROPEAN PATENT APPLICATION

(11) **EP 3 367 647 A1**
(43) Date of publication of application: **29.08.2018**
(21) Application number: 17158189.5
(22) Date of filing: 27.02.2017
(51) Int. Cl.: H04M 1/725

(54) **A METHOD AND A SYSTEM FOR CHANGING A DEVICE FUNCTIONALITY AND A DEVICE WITH A CHANGEABLE FUNCTIONALITY**

(71) Applicant: Advanced Digital Broadcast S.A., 1292 Chambesy (CH)
(72) Inventor: Charydczak, Patryk, 65-119 Zielona Gora (PL)
(74) Representative: Kancelaria Eupatent.pl Sp. z.o.o

(57) **Abstract**

A method for changing a functionality of a mobile device (110) comprising movement sensors (230) and a camera (207), the method comprising the steps of: monitoring (303) whether the mobile device is currently moving, using the movement sensors (230); upon detecting movement, capturing (304) at least one image of the mobile device surrounding, using the camera (207); comparing (305) the captured image to predefined images or patterns stored in a pattern images database; and upon detecting a match with a predetermined pattern image, changing (306) the functionality of the mobile device.

## Description

### TECHNICAL FIELD

The present invention relates to a method and a system for changing a device functionality in response to recognition of ambient environment with use of motion detection and image recognition, as well as to a device with a changeable functionality.

### BACKGROUND

Nowadays mobile devices, offering vast amount of functionalities, are often used during everyday life activities and situations like walking, running, riding a bicycle, driving a car, taking a flight. In some circumstances using a mobile device might be dangerous, because it distracts the attention of the user. To eliminate or reduce such situations, various techniques are implemented in mobile devices to require the user to pay less attention when using the device, such as a loudspeaker, wireless connectivity to audio devices or functionality providing the possibility of operating the device by voice commands, for example while driving a car. However, in some cases such facilities might be not enough and the functionality of the device should be changed, for example limited, for safety of the user. There are known prior art methods for changing the functionality of devices in certain situations.

For example, a US patent US7856203 discloses a system for preventing drivers of a vehicle from cell phone texting while that vehicle is moving. This system comprises a motion detector and a moving vehicle contiguous interior compartment containing at least four courtesy signal transmitters and at least one conventional cell phone having a text keyboard, a microphone, and a courtesy signal receiver disposed in the microphone which is in the keyboard. This compartment may also have devices in it which control the speed and direction the moving vehicle will go, and if so, it may have a moving vehicle driver, who may also be the aforementioned cell phone user, located to operate these devices. The cell phone may enable or disable the keyboard based on courtesy signal transit times and the motion indicator, but this determination may be overridden by the cell phone service provider, or person of authority located in the vehicle contiguous interior compartment.

A US patent US8527013 discloses systems, methods, and devices for controlling and limiting use of functions, such as calling, texting, chatting, emailing, Internet surfing, and similar applications, on a mobile device when the mobile device is in a moving vehicle, includes use of an on-board computer installed within the vehicle, a transmitter in electronic communication with the on-board computer that periodically transmits speed data of the vehicle to a receiver installed on the mobile device, wherein the mobile device includes suitable software and a rules-based policy that define and control when and which functions of the mobile device are disabled or interrupted by the software when the vehicle is in motion above a minimum threshold speed. Policies are set by default but may be customized for particular individuals, devices, or circumstances. Policies may also be customized for particular groups or subgroups of employees or contractors for company or legal compliance to reduce distracted driving.

A US patent US8508379 discloses a method for motion-based disabling of messaging on a wireless communications device by differentiating a driver from a passenger. When a wireless communications device is traveling at a speed exceeding a lower threshold but less than an upper threshold, the device is presumed to be traveling in a motor vehicle. The speed is determined on the basis of a GPS module in the device. In order to inhibit operation of the wireless communication device by a driver without restricting operation by a passenger, access to certain device functions or applications such as e-mail, text messaging, etc. are limited by challenging the user of the device to respond to an ergonomic challenge that requires two-handed user input. Only if two-handed input is received will the wireless communications device grant access to e-mail or instant messaging.

There is a need to provide an alternative solution for changing device functionality to allow alternative method for detecting situations potentially dangerous for use of the device.

### SUMMARY

There is disclosed a method for changing a functionality of a mobile device comprising movement sensors and a camera, the method comprising the steps of: monitoring whether the mobile device is currently moving, using the movement sensors; upon detecting movement, capturing at least one image of the mobile device surrounding, using the camera; comparing the captured image to predefined images or patterns stored in a pattern images database; and upon detecting a match with a predetermined pattern image, changing the functionality of the mobile device.

The step of changing the functionality of the mobile device may comprise limiting the functionality of a display module of the mobile device.

The step of changing the functionality of the mobile device may comprise limiting the functionality of an audio module of the mobile device.

The step of changing the functionality of the mobile device may comprise limiting the functionality of an input interface of the mobile device.

The step of changing the functionality of the mobile device may comprise activating a selected module of the mobile device.

The step of comparing can be performed by an image recognition unit of the mobile device.

The step of comparing can be performed by transmitting the captured image to an external visual recognition service and receiving a response therefrom.

There is also disclosed a non-transitory computer readable storage medium comprising instructions that, when executed by a computer, enable changing a mobile device functionality according to the steps of the method as described above.

There is also disclosed a mobile device with a changeable functionality, the mobile device comprising: movement sensors; a camera; and a processor configured to perform the steps of the method as described above.

Further, there is disclosed a system for changing a functionality of a mobile device, the system comprising: the mobile device as described above; and a visual remote service accessible for the mobile device via a network and configured to compare the captured image to predefined images or patterns stored in a pattern images database.

### BRIEF DESCRIPTION OF DRAWINGS

Further details and features of the present invention, its nature and various advantages will become more apparent from the following detailed description of the preferred embodiments shown in drawings, in which:
Fig. 1 presents examples of application of the presented method;
Fig. 2A presents an overview of a mobile device;
Fig. 2B presents in details a structure of a sensor module of the mobile device;
Fig. 2C presents in details a structure of a connectivity module of the mobile device;
Fig. 3 presents a main flowchart of a method for changing the device functionality;
Fig. 4A presents a procedure performed at the mobile device;
Fig. 4B presents details of step 404 from Fig. 4A;
Fig. 5 presents a procedure performed by a remote visual recognition service.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

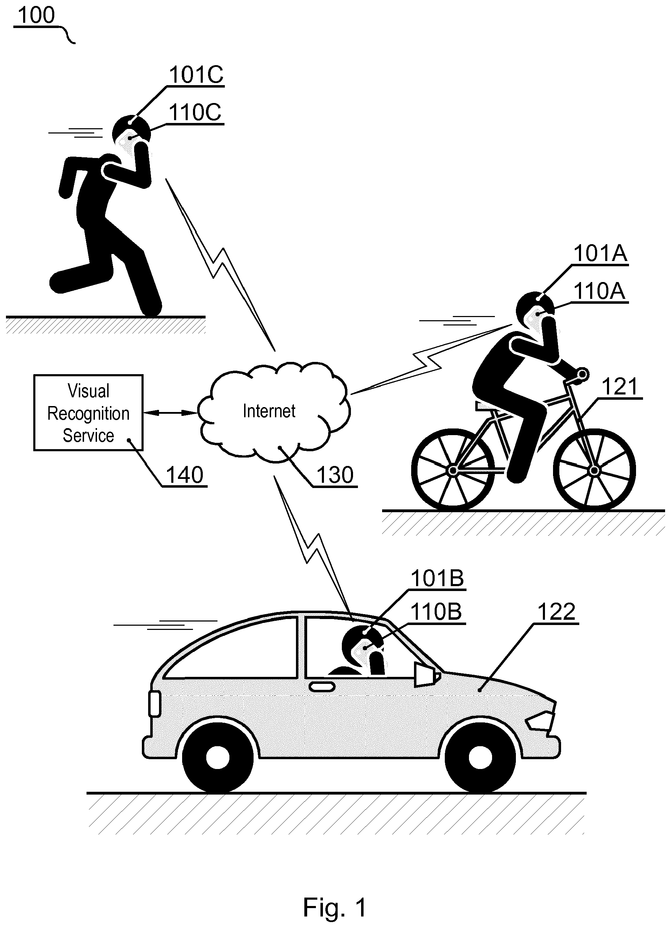

Fig. 1 presents examples of application of a method for changing a device functionality, wherein a user 101A-101C being in motion uses a mobile device 110A-110C, being therefore also in motion. The user, apart from calling, may use the mobile device for editing/receiving SMS/MMS messages, viewing audio/video contents, writing/receiving emails, browsing the Internet and/or similar activities. During the movement, the mobile device captures images of surroundings and if the image is similar to an image stored in a device memory or is similar to representative patterns, then the functionality of the mobile device is changed, for example by blocking selected function(s) or switching the device to in a preset safety mode.

The recognition of the images may be performed by the mobile device 110A-110C itself or the images captured by the device may be transmitted, for example via the Internet, to a remote visual recognition service 140. The remote visual recognition service 140 may comprise a pattern images database and functional blocks used for image recognition, similar to that as described with reference to the mobile device.

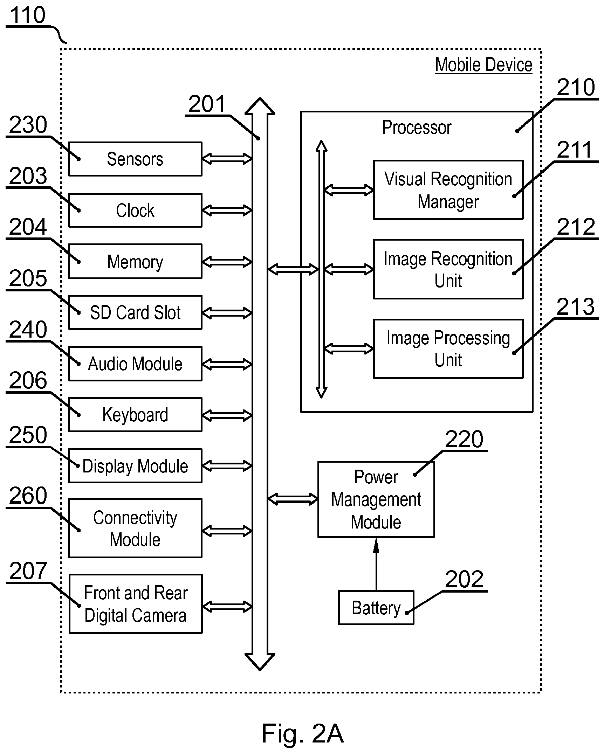

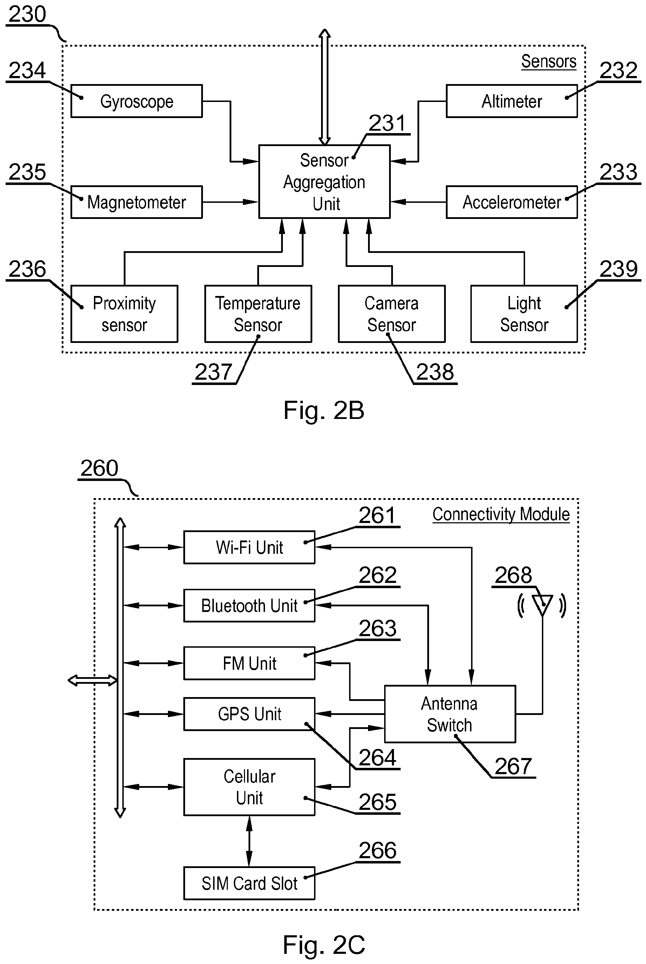

Fig. 2A presents an overview of a typical mobile device. The mobile device 110 comprises a connectivity module 260 responsible for wirelessly receiving and/or transmitting data. The connectivity module 260 will be further presented with reference to Fig. 2C. A memory 204 is used for storing data (including images acquired by internal cameras and image patterns) as well as software executed by the processor 210 of the mobile device (for example, a visual recognition application). A clock module 203 is configured to provide clock reference for other modules of the system. A sensors module 230 comprises at least one sensor as will be presented with reference to Fig. 2B. A front and rear digital camera 207 is used for acquiring images of the surroundings.

Other, typical but optional modules of the mobile device are a display module 250 configured to display the graphical user interface (GUI) to the user, an input interface 206, such as a keyboard, a touch input interface, a voice input interface and/or a gesture input interface, an audio module 240 configured to generate audible signals and/or an external memory slot such as an SD card slot 205 configured to receive and operate an external memory unit. The mobile device may also comprise a power management module 220 cooperating with a battery 202.

A bidirectional data bus 201 may be employed to enable communication between the modules and the processor 210 which further comprises a visual recognition manager 211 which manages the image acquired via the camera(s) 207, an image processing unit 213 for processing the image and an image recognition unit 212 for recognizing the image, wherein the image recognition unit 212 may comprise an internal pattern images database or may be configured to communicate with an external server 140.

Fig. 2B presents in details a structure of a sensor module of the mobile device. The management of sensors may be controlled by a sensors aggregation unit 231, which serves as a bridge between each of the set of sensors and a client requesting data from respective sensors. The sensors may be any one of or any subgroup of the following sensors: a proximity sensor 236, a temperature sensor 237, a light intensity sensor 239, an accelerometer 233, an altimeter 232, a gyroscope 234, a magnetometer 235, and a camera sensor 238. The aforementioned sensors operate according to principles known in the prior art, in particular in the field of smartphones.

Fig. 2C presents in details a structure of a connectivity module of the mobile device. The communication means may be any one of or any subgroup of the following: Wi-Fi 261, Bluetooth 262, FM radio 263, GPS 264, cellular telephony communication unit 265 (such as GSM, 3G, 4G and similar) communicating with a SIM card slot 266, or similar. The different communication means may be managed by an antenna switch 267 connected to an antenna module 268 that may comprise one or more types of antennas.

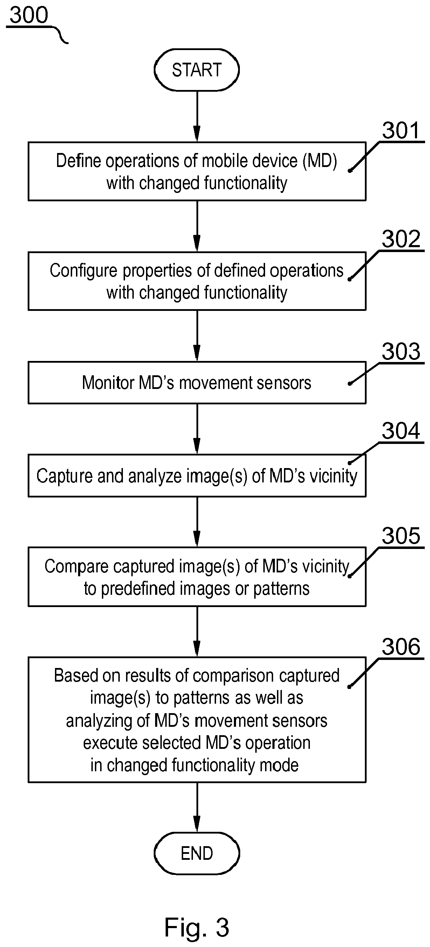

Fig. 3 presents a main flowchart of consecutive steps of method for changing the device functionality. In the first step 301 operations of the mobile device with changed (limited or extended) functionality are defined. Next, in step 302 properties of the defined operations with limited or extended functionality are configured. In step 303 mobile device movement sensors are monitored in order to recognize the character or speed of the device movement. In step 304 the images of the mobile device surroundings are captured and subsequently analyzed. Next, in step 305 the captured images are compared to predefined images or patterns stored in the mobile device memory or at a remote server. Finally, in step 306, basing on the results of comparison of the captured images to the patterns and analysis of signals from the mobile device movement sensors, upon detecting a match with the predetermined pattern, the device functionality is changed, for example by executing the selected mobile device operation with a proper mode.

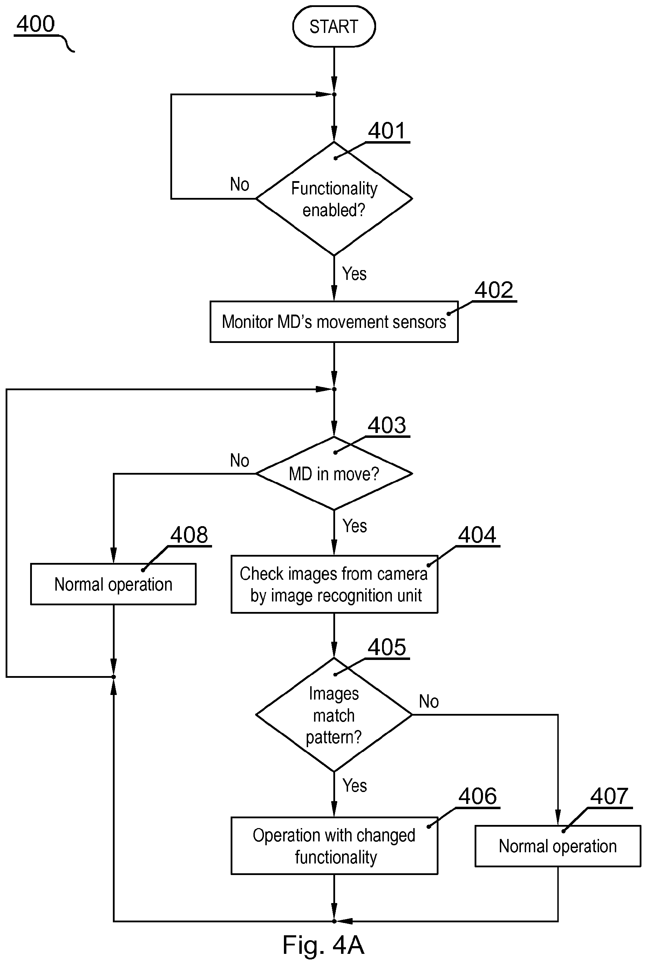

Fig. 4A presents a procedure performed at the mobile device. First, in step 401, an operating system of the mobile device checks if a functionality is enabled. If not, the procedure loops back awaiting the functionality to be enabled. If so, the procedure moves to step 402, wherein the mobile device movement sensors are monitored. Next, in step 403 it is determined whether the mobile device is in movement. If not, the procedure moves to step 408, wherein the operation of the mobile device is set to normal operation and the procedure loops back to step 403. Otherwise, if the mobile device is in motion, in step 404 the images from the camera are checked (analyzed) by the image recognition unit. By activating capture of the images when the device is in motion, power consumption is optimized by avoiding the need to capture images when the device is not moving. Next, in step 405, it is checked if the captured images match a particular pattern. If not, the mobile device remains in normal operation 407, otherwise in step 406 the mobile device operates in a changed functionality mode.

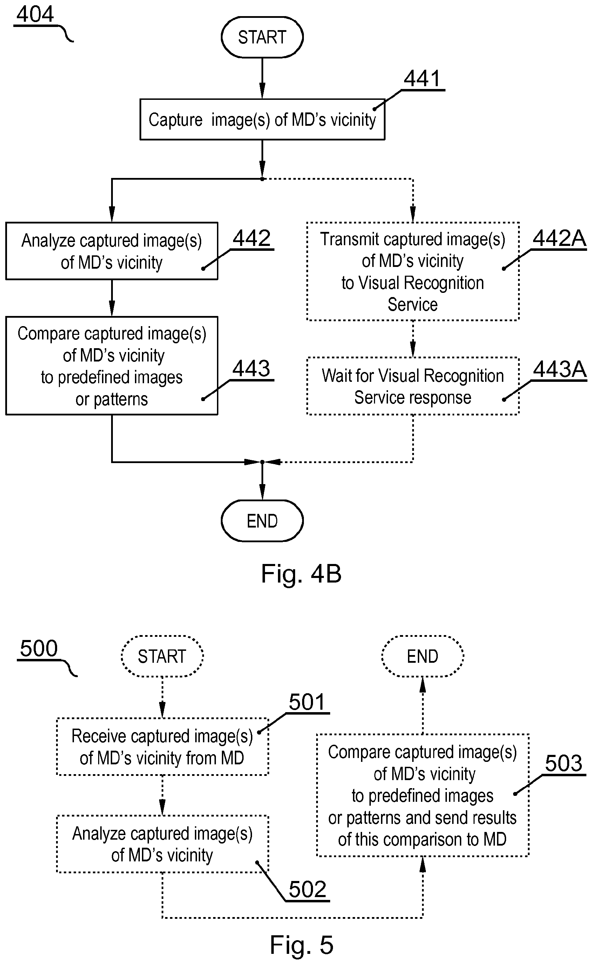

Fig. 4B presents details of step 404 of Fig. 4A, which allows to analyze the images by one of two routes. After capturing the images of the mobile device surroundings, in the first option (route) the captured images are analyzed in step 442 by the mobile device. Next, in step 443 the captured images are compared to the predefined images or patterns stored in the memory of the mobile device (as an internal pattern images database). Alternatively, in the second option (route) in step 442A, the captured images are transmitted to the remote visual recognition service 140 with a remote pattern images database. Next, in step 443A, the mobile device awaits for a response from the visual recognition service.

Fig. 5 presents a procedure conducted by a remote visual recognition service. The procedure 500 starts in step 501 wherein the captured images of the mobile device surroundings are received. Next, in step 502 the received captured images are analyzed. Finally, in step 503 the received captured images of the mobile device surroundings are compared to predefined images or patterns stored in the pattern images database and the result of the comparison is sent to the mobile device.

While determining the movement of the mobile device basing solely on motion sensors might be not enough for specifying the actual activity of the user, for example whether the user is in an elevator or on the moving pavement. Therefore, the comparison of captured images of mobile device surroundings in conducted and allows to specify more accurately the current activity of the user. The surroundings images may match pattern images and be recognized as a street crossing, interior of a car or a plane, etc.

The method for changing the mobile device functionality as presented herein allows to change operation of certain functionalities of the mobile device in order to increase safety of the user in various situations in which concentration is needed (for example while driving a car, crossing a street). While the device is switched to a changed operation mode, the functionality may be limited by restricting access to at least one functionality selected from: display, audio, input interface. For example, a display may be turned off or dimmed or disrupted. The audio may be turned off or tuned down. Touch input may be disabled. Moreover, while the device is switched to a changed operation mode, the functionality of the device can be extended, for example by activating a selected module that was disabled before - for example, by activating functions which were disabled due to low-power operation, by activating additional devices (such as e.g. a flashlight) or by activating additional input interface means (such as voice input or gesture input interface). Furthermore, while the device is switched to a changed operation mode, some operations may be limited and some may be extended with respect to the operation before the change, for example text input can be disabled and voice input can be enabled.

It can be easily recognized, by one skilled in the art, that the aforementioned method for changing device functionality may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for changing a functionality of a mobile device (110) comprising movement sensors (230) and a camera (207), the method comprising the steps of:
- monitoring (303) whether the mobile device is currently moving, using the movement sensors (230);
- upon detecting movement, capturing (304) at least one image of the mobile device surrounding, using the camera (207);
- comparing (305) the captured image to predefined images or patterns stored in a pattern images database; and
- upon detecting a match with a predetermined pattern image, changing (306) the functionality of the mobile device.

2. The method according to claim 1, wherein the step of changing (306) the functionality of the mobile device comprises limiting the functionality of a display module (250) of the mobile device (110).

3. The method according to any of previous claims, wherein the step of changing (306) the functionality of the mobile device comprises limiting the functionality of an audio module (240) of the mobile device (110).

4. The method according to any of previous claims, wherein the step of changing (306) the functionality of the mobile device comprises limiting the functionality of an input interface (206) of the mobile device (110).

5. The method according to any of previous claims, wherein the step of changing (306) the functionality of the mobile device comprises activating a selected module of the mobile device (110).

6. The method according to any of previous claims, wherein the step of comparing (305) is performed by an image recognition unit (212) of the mobile device (110).

7. The method according to any of claims 1-4, wherein the step of comparing (305) is performed by transmitting the captured image to an external visual recognition service (140) and receiving a response therefrom.

8. A non-transitory computer readable storage medium comprising instructions that, when executed by a computer, enable changing a mobile device functionality according to the steps of the method of any of claims 1-7.

9. A mobile device with a changeable functionality, the mobile device (110) comprising:
- movement sensors (230);
- a camera (207); and
- a processor (110) configured to perform the steps of the method of any of claims 1-7.

10. A system for changing a functionality of a mobile device (110), the system comprising:
- the mobile device (110) according to claim 9; and
- a visual remote service (140) accessible for the mobile device (110) via a network (130) and configured to compare (305) the captured image to predefined images or patterns stored in a pattern images database.
